# EUROPEAN PATENT APPLICATION

(11) **EP 1 416 732 A1**
(43) Date of publication of application: **06.05.2004**
(21) Application number: 03256941.0
(22) Date of filing: 03.11.2003
(51) Int. Cl.: H04N 7/173, H04L 29/08

(54) **Method and apparatus for removing clients from interactive tv network**

(30) Priority: 04.11.2002 US 287097
(71) Applicant: Comcast Cable Holdings, Philadelphia, Pennsylvania 19102-2148 (US)
(72) Inventor: Donlan, Brian Joseph, Florida 32444 (US); Rushe, Randall George, Florida 32408 (US)
(74) Representative: W.P. Thompson & Co.

(57) **Abstract**

A system and method manages the provisioning of a client device connected to a service distribution network, such as an interactive television service-providing network. Provisioning is managed by a provisioning manager that knows the specific provisioning data to collect and where the data is located and is to be forwarded. The provisioning manager thus acts as an intelligent provisioning data traffic manager by performing as a central collection and dissemination point for the provisioning data and directing provisioning data flows between a billing system, IP data network, server complex and/or other network systems.

## Description

### CROSS REFERENCE TO RELATED APPLICATION

The present application is related to U.S. Patent Application entitled "METHOD AND APPARATUS FOR MANAGING THE PROVISIONING OF CLIENT DEVICES CONNECTED TO AN INTERACTIVE TV NETWORK", Serial No. 09/671,329, filed September 26,2000, to Donlan, et al., and U.S. Patent Application entitled "METHOD AND APPARATUS FOR PROVISIONING CLIENT DEVICES CONNECTED TO AN INTERACTIVE TV NETWORK", Serial No. 10/287,330, filed concurrently herewith to Donlan, et al., which are incorporated herein by this reference.

### FIELD OF THE INVENTION

The invention relates generally to a method and apparatus for managing the provisioning of a telecommunication network and specifically to a method and apparatus for managing the provisioning of an interactive television (ITV) network and the associated ITV client devices connected thereto.

### BACKGROUND OF THE INVENTION

Implementation and operation of a communications service, whether it be a voice, video or data communications service, requires the interconnection of a plurality of networks, systems, devices and equipment, which may be geographically co-located or separated. Presently, each of these networks, systems, devices and equipment may need to be "provisioned" to enable the establishment of a communications connection path. In general, "provisioning" is the addition of a subscriber (*e.g*., a subscriber terminal device and/or network component) to, deletion of a subscriber from, or modification of a subscriber's services provided by a network, system, or other type of infrastructure providing entitled services. Provisioning permits the pertinent architecture to recognize and/or communicate with the subscriber.

Some form of provisioning is necessary, whether the communications connection path connects a plurality of subscriber terminal devices (*e.g.*, telephones, televisions, streaming media players, set-top box audio/video decoders, wireless device base station, *etc.*), as in a telephone, data or audio or video distribution network, or whether the path connects one or more subscriber terminal devices (*e.g.*, work stations, personal computers, PDA, *etc.*) with one or more servers, as in a client-server computing network. In many operational situations, each of the interconnected plurality of networks, systems, devices and equipment may need to be provisioned independently and separately (either manually with human intervention or automatically), thereby resulting in potential time delays, inefficiencies, or errors in enabling the subscriber terminal to connect to and use the communications network services.

As a type of communications network, an interactive television (ITV) network and subscriber terminal devices connected thereto are "provisioned" to enable the subscriber terminal devices to use ITV services via the ITV network. Subscriber terminal devices, which are ITV client devices connected to the ITV network, may include television sets, set-top audio/video decoder boxes, personal computers, and video recorders, among other video, audio and data devices. The convergence of television transmission networks, IP (*i.e.*, Internet Protocol) data networks, and distributed client-server computing networks to implement an operational ITV network necessitates the interconnection of a plurality of networks, systems, devices and equipment, which may be geographically co-located or separated, as components of the ITV network as a whole. Presently, each of these component interconnected networks, systems, devices and equipment typically are independently and separately "provisioned" to enable the establishment of a communications connection path and the use of the ITV network by an ITV client device (i.e. subscriber terminal) for entitled ITV services.

Accordingly, there exists a need for a method and apparatus for commonly (i.e. as a whole) managing the automatic provisioning of these interconnected component networks, systems, devices and equipment comprising the entire ITV network.

### SUMMARY OF THE INVENTION

In accordance with a first aspect of the present invention, there is provided a method of managing the provisioning of interactive client devices for connection to an interactive television network for using interactive television (ITV) services, comprising:
receiving, at a first ITV network component, a provisioning request to at least one of remove a subscriber or user from a list of subscribers or users having a right to access the interactive television network, suspend a subscriber or user from assessing the interactive television network, and reactivating a subscriber's or user's ability to access the interactive television network;
determining which of a plurality of other ITV network components are to receive at least some of the provisioning information associated with the provisioning request; and
communicating the at least some of the provisioning information to at least one other ITV network component, the at least one other ITV network component being different from the first ITV network component.

In accordance with a second aspect of the present invention, there is provided a system for managing the provisioning of interactive client devices for connection to an interactive television network for using interactive television (ITV) services, comprising:
first receiving means for receiving from a first ITV network component provisioning information relating to at least one subscriber or user;
determining means for determining which of a plurality of other ITV network components are to receive at least some of the provisioning information;
communicating means for communicating the at least some of the provisioning information to at least one other ITV network component, the at least one other ITV network component being different from the first ITV network component and providing a service requested by the at least one subscriber or user;
second receiving means for receiving from the at least one other ITV network component provisioning response information; and
storage means for storing the service provisioning response information.

In accordance with a third aspect of the present invention there is provided a provisioning message related to a provisioning transaction in an interactive television network (ITV), the provisioning message including:
a length field indicating a length of the provisioning message;
an action field indicating a provisioning action to be performed;
an object field indicating a type of object on which the provisioning action is to be performed; and
a provisioning information field containing provisioning information corresponding to the action and object.

The present invention provides a client-network provisioning manager for managing the provisioning of a telecommunication service network and a plurality of client devices connected to the network for using the telecommunication services. The teachings of the present invention are applicable to a broad variety of subscriber telecommunication services and/or pay-for-use services, including interactive television, cable television, telephone, video, audio, on-line databases, noninteractive television, radio, music video, video juke box, pay-for-view, video-on-demand, home-shopping, video conferences, telephone conferences, interfacing to imaging systems, automatic telephone call charge-backs ("900" numbers) and other telecommunication services. The teachings are also applicable to a variety of telecommunication systems, including multi-channel telecommunication services, single channel multi-service telecommunications, and single channel single service telecommunications. As will be appreciated from the foregoing, the user may be a subscriber or nonsubscriber.

The provisioning manager of the present invention communicates with the individual provisioning methods/apparatus of each of the network components for the purpose of effectuating the overall provisioning of the client devices with the necessary network components in a coordinated, common, and automated manner. By knowing the specific provisioning data to collect, where the data is found and is to be forwarded, the provisioning manager acts as an intelligent provisioning data manager by performing as a central collection and dissemination point for the provisioning data, directing provisioning data flows between the provisioning methods/apparatus ofthe individual network components. As such a central point, the provisioning manager makes the automatic provisioning process more efficient. In one configuration the provisioning manager insures that dependent transactions (of each request/response transaction which are typically handled independently) are made in the correct sequence. For example, a "user-suspend" request is not issued until the related "subscriber-suspend" request has completed successfully.

Although the present invention is described as a central collection and dissemination point, the methods and apparatus described may be implemented as an independent unit coupled to the network, or may be distributed throughout the network.

The provisioning manager includes a user interface for use by customer support representative personnel, as well as application programming interfaces ("API(s)"), protocol and signal interfaces to the individual provisioning methods/apparatus of the respective : network components. The type ofinformation managed by the provisioning manager includes, but is not limited to, data related to: IP provisioning of the client device for IP communication with the network; centralized provisioning from controlled data centers; support for self-provisioning of capabilities delivered to the client device; subscribers' services enrollment and entitlement; installation of the client device; and the provisioning process flow.

Message communications transactions between the provisioning manager and the provisioning systems of the other network components, *e.g.*, the billing system, the various servers, the IP data network, and such other network components forming the ITV network, are conducted via appropriate protocol and signal interfaces and APIs defined for each respective network component provisioning system. The message communications transactions are stored in a provisioning manager database.

The teachings of the present invention are particularly applicable to an interactive television (ITV) network having an ITV provisioning manager. The ITV network- comprises a plurality of component interconnected networks, systems, devices and equipment. The component interconnected networks, systems, devices and equipment (the "ITV network component(s)") include, but are not limited to, analog or digital television transmission networks, IP (i.e. internet protocol) data networks, distributed client-server computer networks, subscriber management billing systems, and one or more ITV client devices, which may be geographically co-located or separated. ITV client devices include, but are not limited to, set-top video/audio converter decoder boxes, television receivers, video/audio recorders or players, data modems and computers which can process video, audio or data signals for transmission, storage, visual display or sound emission.

In one configuration, operators/providers of the ITV services are different business entities separate, distinct and independent from each of the ITV network component operators/providers.

In one configuration, one or more of the ITV network components has its own independent, respective provisioning methods or apparatus particular to that component's function in the ITV network. Such methods or apparatus may represent only a fractional part of the overall provisioning functions necessary to provision the ITV client devices and/or the ITV network as a whole.

The above-described operation is exemplary, and the individual provisioning and intercommunication of messages between the provisioning manager and the other network components may be conducted in alternative orders of occurrence without departing from the spirit and scope of the present invention. Moreover, the above description of configurations and/or embodiments of the present invention is neither exhaustive nor limiting. As will be appreciated, the features of the present invention can be combined in a variety of other ways, which are within the spirit and scope of the present invention.

### BRIEF DESCRIPTION OF THE DRAWINGS

By way of example only, a specific embodiment of the present invention will now be described with reference to the accompanying drawings, in which
Figure 1 is an exemplary block diagram of an ITV Network according to a preferred embodiment of the present invention;
Figure 2 depicts a configuration of an ITV client device;
Figure 3 is an exemplary diagram of provisioning message interfaces of the ITV Provisioning manager device of Figure 1;
Figure 4 is a data schema for data storage 228
Figure 5 depicts the signal flows for a delete subscriber transaction;
Figure 6 depicts the signal flows for a suspend subscriber transaction; and
Figure 7 depicts the signal flows for a reactivate subscriber transaction;

### DETAILED DESCRIPTION

### The ITV Network

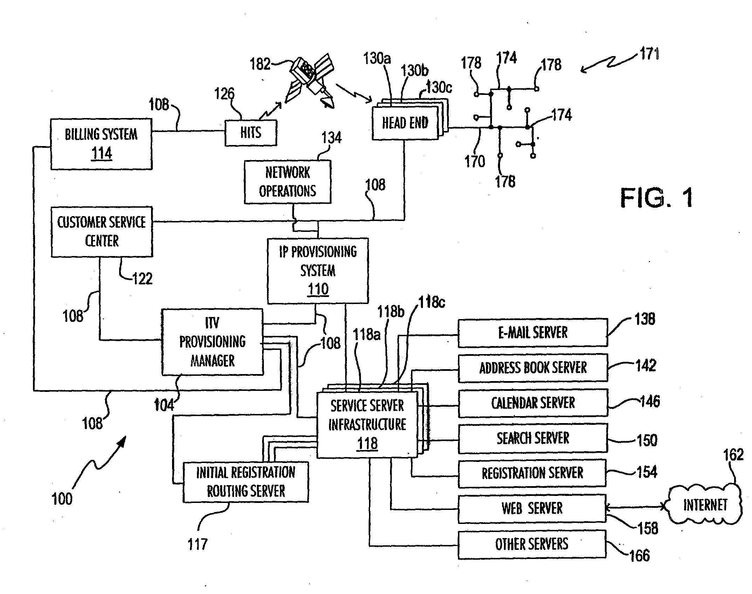

Figure 1 is an exemplary block diagram of an ITV Network 100 according to a preferred embodiment of the present invention. As shown in Figure 1, the ITV Network comprises a plurality of interconnected networks, systems, devices and equipment, which may be geographically co-located or separated. For the purposes of discussion, these interconnected networks, systems, devices and equipment are referred to collectively as "ITV Network Components" and individually as an "ITV Network Component". Each ITV Network Component may include its own respective provisioning system, method or apparatus; and, for the purposes of discussion, reference to an ITV Network Component includes reference to its respective provisioning system, method or apparatus.

The ITV Provisioning manager 104, via one or more communications link(s) 108, interconnects and communicates with ITV Network Components including, but not limited to, at least one IP provisioning system 110, at least one subscriber management billing system 114, at least one service server infrastructure 118a-c, customer service center 122, head end in the sky (HITS) 126, one or more head ends 130a-c, and network operations 134, and other required additional ITV Network Components (not shown) comprising the ITV Network 100.

Each ofthe service server infrastructures 118a-c includes or is connected to a plurality of application, content, and/or control servers. The servers provide or control the provision of selected services to a subscriber. Examples of such servers include an e-mail server 138 to send and receive e-mail, an address book server 142 to enter and retrieve address information from the subscriber's personal records, a calendar server 146 to enter and retrieve calendar or scheduling information from the subscriber's calendaring records, a search server 150 to perform network-related searches, a registration server 154 to register new subscribers in the corresponding server infrastructure, a web server 158 to provide connection to the internet 162, and other servers 166 providing any number of other services (*e.g.*, a home page server, chat server, and messaging server).

The service server infrastructures are each assigned to serve a number of subscribers having selected common attributes. In one configuration, the service server infrastructures each serve subscribers from a unique geographical area.

Each of the head ends 130a-c is connected to a distribution network 171 including various feeders 170 and branches 174 and connections to subscriber locations or nodes 178. At each subscriber location or node 178, an ITV client device is located.

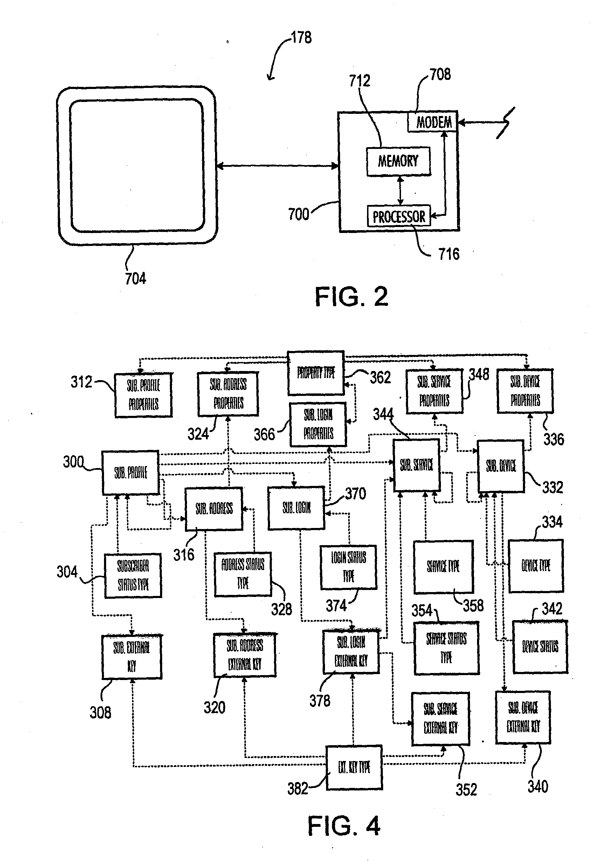

Figure 2 shows the hardware configuration of the typical ITV client device. The ITV client device is typically a set-top box (or stb) 700 connected to a television 704. Set-top box 700 typically includes a modem 708, memory 712, and processor 716.

As will be appreciated, an ITV client device can access a number of services. For example, the subscriber can access through device 178 programming material for the subscriber's television 704. The material is transmitted by the HITS 126 via satellite 182 to a head end 130a-c and via feeder 170 and branch 174 to the subscriber's client device or set-top box 300. The subscriber can also access the services provided by the service server infrastructure. The services are accessed via branch 174, feeder 170, and link 108.

The numbering of ITV Components 104-166 is not intended to be a limitation on the number of additional ITV Components comprising the ITV Network 100; and the preferred embodiment of the present invention contemplates any number of ITV Network Components comprising the ITV Network 100.

Link(s) 108, feeder(s) 170 and branch(es) 174 may include any combination of one or more wired or wireless, electrical or optical connections or telecommunications data networks, whether packet or circuit switched, global, national, regional, wide-area, local area, or in-home networks, without departing from the spirit and scope of the present invention. Similarly, the IP provisioning system can provision any IP data network that may be implemented on any combination of one or more wired or wireless, electrical or optical connections ortelecommunications datanetworks, whether packet or circuit switched, global, national, regional, wide-area, local area, or in-home networks.

### The ITV Provisioning manager

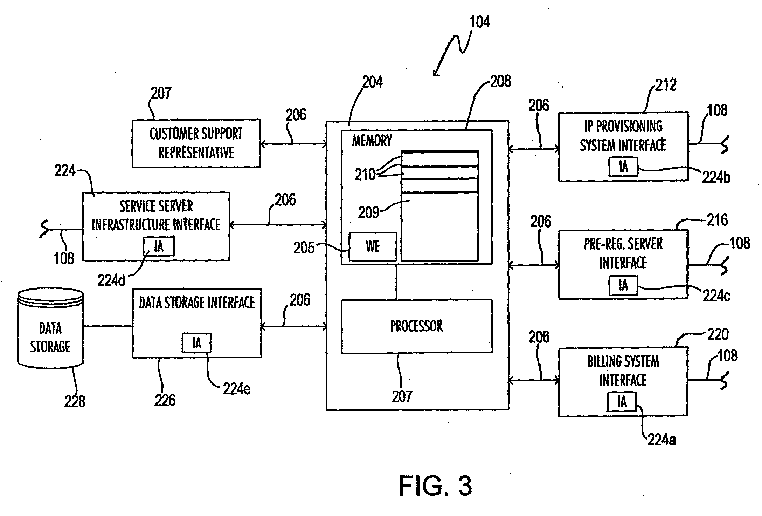

Figure 3 is an exemplary block diagram of an ITV Provisioning manager device 104. The ITV Provisioning manager device 104 includes a controller 204 (which includes processor 207 and memory 208), an IP provisioning system message interface (server) 212, a service delivery infrastructure message interface (server) 224, a billing system message interface (server) 220, a pre-registration server interface (server) 216 (through which the pre-registration server communicates with the ITV Provisioning manager 104), data storage interface 226, a communication interface (not shown) with a customer support representative 207 in the customer service center 122 (Figure 1), and an ITV provisioning data storage 228. As will be appreciated, an "interface" is a connection between two systems through which information is exchanged.

The controller memory 208 includes a workflow engine ("WE") 205 and one or more queues 209 containing one or more transactions 210. The WE 205 performs the service-order workflow instantiation and state management. If the ITV provisioning manager 104 determines that an ITV network component is unavailable during the provisioning process, the manager 104 will suspend or queue the transactions(s) in queue 209 for transmission at a later time. Likewise if the ITV provisioning manager 104 is unavailable, other ITV network components will queue the transactions for transmission at a later time.

Each ofthe interfaces 212, 216, 220, 224, and 226 include an interface adapter ("IA") 224 that communicates directly with elements such as applications or database servers. Each IA translates tasks into the syntax understood by the element and oversees the execution of operations. In interfaces 212, 220, and 216, the IA 224b, 224a, and 224d further communicate directly with the external application programs. Each IA in these interfaces identifies the business events that require mediation to downstream or upstream components identified as part of the service delivery and management architecture for a service provider. The IA 224a,b,d uses the WE 205 to access data storage 228 for a sub-selection of events in order to determine the full impact of an event on a subscriber profile, such as in cases where the message from the billing system 114 does not provide complete service impact scope. For example, the IA 224a,b,d receives a request from an external computational component. The IA handles the header (protocol) fields, places the information in the request in the appropriate syntax), validates the request according to predefined criteria, and provides a suitable request or work order to the WE 205 to provide selected information from data storage 228. The WE 205 then executes the work order according to predetermined instructions for the particular transaction type and retrieves the necessary information from data storage 228. The WE then sends the information to the appropriate IA's for each computational component requiring notification ofthe transaction. The IA then assembles the information in the appropriate order and syntax and adds the pertinent header (protocol) fields to the information and sends the message to the appropriate external computational component or set of computational components for further processing.

Error processing can be handled by the IA and WE in any number of techniques known to those in the art. In one configuration, each of the components backs-up to a log file both a successful receipt of a transaction from an external system or another internal component and a successful send of a transaction to an external system or an internal component to enable roll-back and re-start at a prior step. When the IA becomes unavailable, external systems re-try their requests until the IA becomes available while the WE queues the response in queue 209 until the IA becomes available. This is done because the manager 104 may have already sent back a success response to the billing system. When the IA becomes available, the external system will resend the request if it has not received a reply. The IA will treat a request as a new request and validate it according to standard rules. When the WE becomes unavailable, all transmissions to an IA are continued from the point of entry of the IA request/response to the WE; all transmissions from an IA will continue from the back-up log when the IA request/response entered the WE; and all transmission to an IA will continue back from the last step in the back-up log done in WE for that workflow. When the IA communicating to data storage 228 becomes unavailable, all transactions will be failed and the external systems will be notified.

Typically, users are initially configured by the ITV provisioning manager 104 based on account and site registration information provided to it by customer service center 122 (Figure 1). The IA's in each interface then receive the transaction and coordinate with WE to update the database of each service provider (*e.g*., billing system 114, IP provisioning system 110, and customer service center 122).

The above components are coupled together through control, address and data buses 206. In one configuration, the various links 108 each represent a socket-based synchronous connection.

The various message interfaces 212, 216, 220, and 224 may be a single interface type or a plurality of interface types, each of which communicates messages to an ITV Network Component 110, 117, 114, and 118, respectively, (Figure 1) using one or more signal types, protocols and APIs (application programming interfaces) appropriate to the appropriate ITV Network Component. The ITV Provisioning manager 104 in its entirety, or its various components, *e.g.*, the controller 204, message interfaces 212, 216, 220, and 224, or data storage 228, may be implemented as independent units connected to the ITV Network 100, or may be distributed throughout the ITV Network 100, manifested in whole or in part, as a plurality of devices or as constituent parts of other ITV Network Components 104-166. For example and without limiting any location alternatives, the ITV Provisioning manager 104, in whole or in part, may be located in a cable TV system headend (*e.g*., headend 130, a telephone central office, a satellite up-link center (*e.g.*, HITS 126), a broadcast studio, a server complex (*e.g.,* service server infrastructure 118), and/or a data center (*e.g.,* billing system 114 and/or customer service center 122).

The controller 204 stores provisioning message communications transactions in one or more database(s) contained in data storage 228. Data storage 228 may include semiconductor memory, as well as magnetic, electrical or optical mass storage devices or combinations thereof, without departing from the spirit and scope of the present invention. In one configuration, data storage 228 is an "ORACLE"™ data-store that serves as the source of current information for all customer account and service profiles required for service activation/deactivation. IA 224e in the data storage interface 226 is typically configured to invoke Structured Query Language (SQL) statements against the data storage 228 to maintain current subscriber device and service profile information.

All provisioning transactions are preferably synchronous, but multiple, independent transactions may be in progress at any one time. Request documents typically consists of a single provisioning transaction and may contain attributes and multiple data elements. A response document typically contains result (status) information, and, if applicable, requested data for the transaction in the request document. Document fragments can be provided for each transaction type. For example, XML documents can be made of elements. Each element can have one or more attributes (metadata) associated with it and can contain either data or other elements.

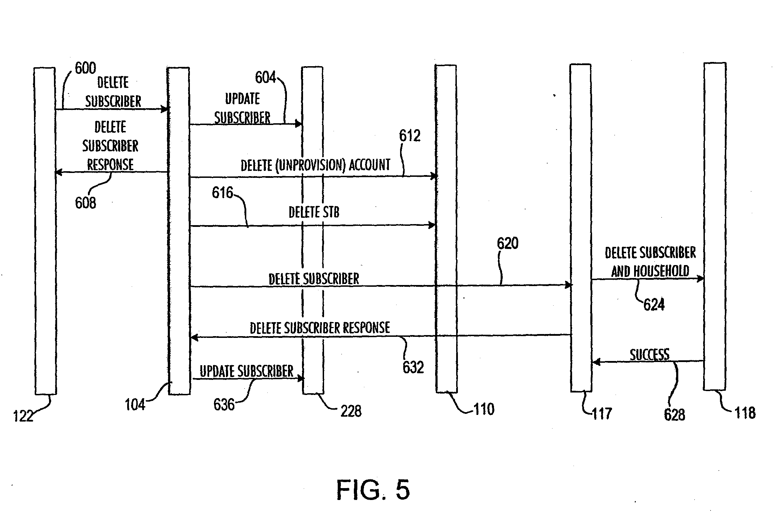

In accordance with a preferred embodiment of the present invention, Figure 4 shows a diagram of a database schema of the database stored on data storage device 228 of Figure 2. As can be seen from Figure 4, the database schema includes the following entities: subscriber profile 300, subscriber status type 304, subscriber external keys 308, subscriber profile properties 312, subscriber address 316, subscriber address external keys 320, subscriber address properties 324, subscriber address status 328, subscriber device (the set-top box) 332, subscriber device properties 336, subscriber device external keys 340, device status 342, device type 334, subscriber services 344, subscriber service properties 348, subscriber service external keys 352, service status type 354, service type 358, property type 362, subscriber login properties 366, subscriber login 370, login status type 374, subscriber login external key 378, and external key type 382.

The one or more provisioning message interface(s) 212, 216, 220, and 224 may be implemented using proprietary protocols specially developed for the present invention, or industry-standard protocols widely known in the art, including, but not limited, to any combinations of XML(*i.e.,* extended mark-up language), LDAP(*i.e.,* Light-Weight Directory Protocol), SQL(i.e. Structured Query Language), WTVP(*i.e*., Web TVProtocol), HTTP(*i.e.*, hypertext transport protocol), HTML (*i.e.,* hypertext markup language), DLLs (*i.e.,* dynamic link libraries), ODBC (*i.e.,* Open Database Connectivity), RDBMS (*i.e.,* remote data base management system), RDO (*i.e.,* Remote Data Objects), ADO (*i.e.,* Active-X Data Objects), and COBRA (*i.e.* Common Object Resource Broker Architecture).

In preferred embodiment, the IA 224a in interface 220 supports the API2.3 notification architecture, uses a ServiceBroker™ Message Formatter/Parser based adapter to format and interpret messages, and uses the Synchronous Listener and Sockets Sender (Pure Sockets) protocols; the IA 224b in interface 212 supports shell and pearl script architectures, uses the ServiceBroker™ Message Formatter/Parser based adapter to format and interpret messages, and uses the Synchronous (TCP Socket) protocol; the IA 224c in interface 216 uses the ServiceBroker™ Message Formatter/Parser based adapter to format and interpret XML messages and the synchronous HTTP protocol; the IA 224d in interface 224 uses the ServiceBroker™ Message Formatter/Parser based adapter to format and interpret XML messages and the synchronous HTTP protocol; and the IA 224e in interface 226 is configured to invoke Structured Query Language (SQL) statements against the data storage 228, is configured using ServiceBroker™Call Invocation Framework over an Oracle™ SQL protocol to format and interpret calls, and uses the synchronous Oracle™ Context protocol.

In operation, the controller 204 communicates through the message interface(s), via the communications link(s) 108, with an ITV Network Component 104-166, data messages containing provisioning-related information including, but not limited to, customer order registration code(s), ITV client device unit address(es), IP address(es), medium access control or MAC address(es), billing system identification number(s), server registration assignment(s), and the like.

### The Provisioning Process

Generally, the ITV provisioning manager 104 provides an intelligent service activation flow through by interfacing with operational support systems and business support systems (collectively referred to as "service providers") and the elements, applications and service components that provide the final service to the subscriber and the management of the subscriber's service. The provisioning process for adding a new subscriber (*e.g*., the create subscriber, create account, create site, *etc.* commands) is discussed in U. S. Patent Application entitled "METHOD AND APPARATUS FOR MANAGING THE PROVISIONING OF CLIENT DEVICES CONNECTED TO AN INTERACTIVE TV NETWORK', Serial No. 09/671,329 filed September 26, 2000.

Once a subscriber has completed registration or provisioning, the subscriber is provided with a user interface (not shown) that allows the subscriber to register for new or additional instances of services (*e.g.,* update or modify subscriber, update site, update Stb, add/delete/modify user, *etc*. commands). This transaction is forwarded to the OA corresponding to the IP provisioning system interface 212. The IA coordinates with WE to notify all upstream systems that have registered to be notified of the occurrences of those events. The modification of a subscriber's services, either by the customer service center 122 or subscriber himself, is discussed in U.S. Patent Application entitled "Method and Apparatus for Provisioning Client Devices Connected to an Interactive TV Network", Serial No. 10/287,330, filed concurrently herewith.

The present application will discuss the procedures for deleting, suspending, and/or reactivating an existing or former subscriber. These transactions are typically referred to as the delete subscriber, suspend subscriber, and activate subscriber commands or transactions. The transaction is commenced typically through the customer service center 122 (a "top down" transaction).

In the processes described below, there are a number of interface definitions and restrictions. All data "values" passed into the manager 104 remain in the case in which it was passed. Case changes are not performed by the manager 104. The initial four byte position in the message string indicates the length of the transaction, from the first pipe up to and including the newline character at the end. Position parameters "action" and "type" must appear at the beginning of each string. The first position field includes a value specifying an action (e.g., delete, update, create and add) and the second field a value specifying the type of object (e.g., subscriber, site, ITV client device, and user) on which the action is to be performed. The remaining provisioning data information appears as <name>=<value> pairs, where <name> is the field name and <value> is the value of the field name for the transaction. Parameters passed in a message to the manager 104, but not configured, as one of the valid parameters for a specific transaction type will be ignored by the application. Parameter propagation to work orders is explicit rather than implicit. All parameters, names, and values are case insensitive. Values are converted to uppercase when inserted into the data storage 228.

### Delete Subscriber Transaction

Referring to Figure 5, the procedures for the delete subscriber transaction in accordance with a preferred embodiment is discussed. The transaction can be initiated by a customer service representative 207 (Figure 3) in response to the subscriber's request or by a request from billing system 114 due, for example, to nonpayment of a bill and the like. In the former case, the customer service representative enters the subscriber identification data and retrieves subscriber data from a support tool in the billing system 114. The representative enters the identification key for the subscriber and generates a delete subscriber request 600 (which specifies the billing system subscriber account number and subscriber id). Alternatively, the representative could initiate the transaction using a customer service tool integrated directly with the manager 104 rather than by way of the billing system.

When the delete subscriber request 600 is received by the ITV provisioning manager 104, the IA in the billing system interface 220 first determines whether the transaction is valid by first verifying the message's use of the correct parameter size, the proper type, the proper value range, the proper format, and the proper field condition, and, if the foregoing are verified, determining if the subscriber identification parameters have a match in data storage 228. If the message is valid and a match exists, a work order is created within the IA for the delete subscriber request 600 and the work order information is updated in data storage 228 by an update subscriber command 604 conveyed via IA 224e in the data storage interface 226.

A delete subscriber response message 608 is returned to the customer service center 122, providing pass information or, when the message is invalid and/or no match is found, fail information.

The provisioning manager 104 next forwards a delete (unprovision) account message 612 and delete stb 616 to the IP provisioning system 110. After verifying the contents of the messages, the IP provisioning system 110 updates its data base (not shown) in response to the messages.

The manager 104 next forwards a delete subscriber message 620 to the pre-registration server 117. After verifying the contents of the message, the server 117 forwards a delete subscriber and household message 624 containing the subscriber identification information to the corresponding service server infrastructure 118 serving the subscriber. The infrastructure 118 verifies the contents ofthe message, and, if properly verified, a server in the infrastructure 118 further initiates transactions with external service providers (e-mail server 138, address book server 142, calendar server 146, *etc.*) to delete access to those services by users associated with the subscriber's account. Each service responds with a completion message. When all completion messages are successfully received, the server in the infrastructure 118 updates the infrastructure database (not shown) by marking the subscriber as deleted. The infrastructure 118 then forwards a success message 628 to the pre-registration server 117 acknowledging receipt ofthe message and removal ofthe subscriber and associated users from all appropriate databases of service providers.

The server 117 forwards a delete subscriber response message 632 to the provisioning manager 104 and further provides an indication whether the success message 628 was verified (pass or fail information).

Upon receipt of the message, the manager 104 matches the response against the message 620 originally sent and forwards an update subscriber message 636 to data storage via interface 226. In response, the users associated with the subscriber are marked as having been deleted. In one configuration, the manager 104 then returns a "success" message (not shown) to the customer service center 122 and/or billing system 114.

### Suspend Subscriber Transaction

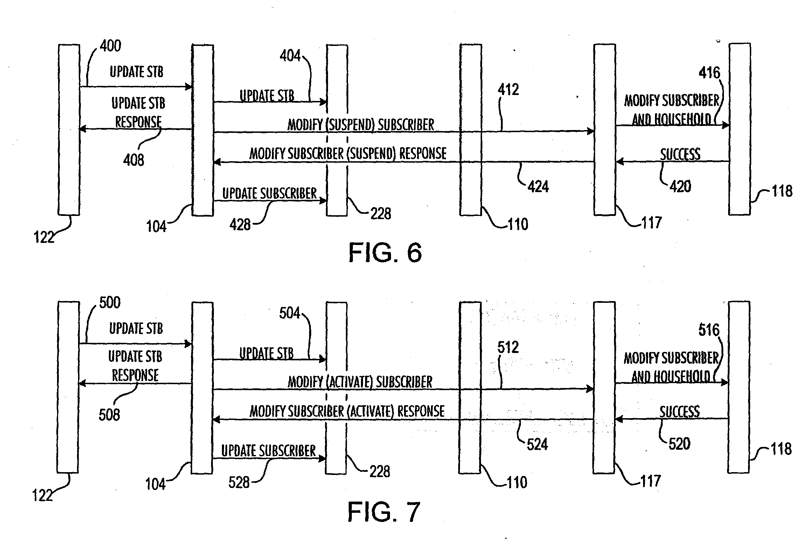

Referring to Figure 6, the procedures for the suspend subscriber transaction will now be discussed. The transaction is initiated by a customer service representative in response to the subscriber's request, by a request from billing system 114 due, for example, to nonpayment of a bill, and the like. When the customer service representative initiates the transaction, the customer service representative retrieves the set-top box identification data for the subscriber from the billing system subscriber support tool. The representative enters the set-top box identification information for the subscriber's set-top box(es) and generates an update stb request 400. When the billing system initiates the transaction, the billing system automatically generates and forwards the update stb request 400.

When the update stb request 400 is received by the ITV provisioning manager 104, the IA in the customer support interface 224 first determines whether the transaction is valid by verifying the message's use of the correct parameter size, the proper type, the proper value range, the proper format, and the proper field condition, and, when the foregoing criteria are valid, determines whether there is a match for the set-top box identification parameters (stb key) in data storage 228 for this subscriber. If the message is valid and a match exists, a work order is created within the IA for the update stb request 400 and the work order information is updated in data storage 228 by an update stb message 404 conveyed via IA 224e in the data storage interface 226.

An update stb response message 408 is returned to the customer service center 122 (and/or billing system), providing pass information or, when the message is invalid and/or no match is found, fail information.

The provisioning manager 104 next forwards a modify (suspend) subscriber message 412 to the pre-registration server 117. The modify (suspend) subscriber message 412 includes the subscriber identification data. After verifying the contents of the messages, the pre-registration server 117 updates its data base (not shown) in response to the messages and forwards a modify subscriber and household message 416 containing the subscriber identification information to the corresponding service server infrastructure 118- serving the subscriber. The infrastructure 118 verifies the contents of the message, and, if properly verified, a server in the infrastructure 118 further initiates transactions with external service providers (e-mail, calendar, *etc*.) to suspend access to those services by users associated with the subscriber's account. Each service responds with a completion message. When all completion messages are successfully received, the server updates the infrastructure database (not shown) by marking the subscriber as suspended. The infrastructure 118 then forwards a success message 420 to the pre-registration server 117 acknowledging receipt ofthe message and suspension of the subscriber and associated users from all appropriate databases of service providers.

The server 117 forwards the modify subscriber (suspend) response message 424 to the provisioning manager 104 and further provides an indication whether the success message 420 was verified (pass or fail information).

Upon receipt of the message, the manager 104 matches the response against the message 412 originally sent and forwards an update subscriber message 428 to data storage via interface 226. In response, the users associated with the subscriber are marked as having been suspended. In one configuration, the manager 104 then returns a "success" message (not shown) to the customer service center 122 and/or billing system 114.

### Reactivate Subscriber Transaction

Referring to Figure 7, the procedures for the reactivate subscriber transaction will now be discussed. The transaction is initiated by a customer service representative in response to the subscriber's request, by a request from billing system 114 due, for example,-to payment of an overdue bill, and the like. When the customer service representative initiates the transaction, the customer service representative retrieves the set-top box identification data for the subscriber from the billing system subscriber support tool. The representative enters the set-top box identification information for the subscriber's set-top box(es) and generates an update stb request 500. When the billing system initiates the transaction, the billing system automatically generates and forwards the update stb request 500.

When the update stb request 500 is received by the ITV provisioning manager 104, the IA in the customer support interface 224 first determines whether the transaction is valid by verifying the message's use of the correct parameter size, the proper type, the proper value range, the proper format, and the proper field condition, and, when the foregoing criteria are valid, determines whether there is a match for the set-top box identification parameters (stb key) in data storage 228 for this subscriber. If the message is valid and a match exists, a work order is created within the IA for the update stb request 500, and the work order information is updated in data storage 228 by an update subscriber message 504 conveyed via IA 224e in the data storage interface 226.

An update stb response message 508 is returned to the customer service center 122 (and/or billing system), providing pass information or, when the message is invalid and/or no match is found, fail information.

The provisioning manager 104 next forwards a modify (activate) subscriber message 512 to the pre-registration server 117. The modify (activate) subscriber message 512 includes the subscriber identification data.

After verifying the contents of the messages, the pre-registration server 117 updates its data base (not shown) in response to the messages, and forwards a modify subscriber and household message 516 containing the subscriber identification information to the corresponding service server infrastructure 118 serving the subscriber. The infrastructure 118 verifies the contents of the message, and, if properly verified, a server in the infrastructure 118 further initiates transactions with external service providers (e-mail server, calendar server, *etc.*) to activate access to those services by users associated with the subscriber's account. Each service responds with a completion message. When all completion messages are successfully received, the server updates the infrastructure database (not shown) by marking the subscriber as active. The infrastructure 118 then forwards a success message 520 to the pre-registration server 117 acknowledging receipt of the message and activation of the subscriber and associated users in all appropriate databases of service providers.

The server 117 forwards the modify subscriber (activate) response message 524 to the provisioning manager 104 and further provides an indication whether the success message 520 was verified (pass or fail information).

Upon receipt of the message, the manager 104 matches the response against the message 512 originally sent and forwards an update subscriber message 528 to data storage via interface 226. In response, the users associated with the subscriber are marked as active. In one configuration, the manager 104 then returns a "success" message (not shown) to the customer service center 122 and/or billing system 114.

While this invention has been described in conjunction with the specific embodiments thereof, it is evident that many alternatives, modifications, and variations will be apparent to those skilled in the art. Accordingly, preferred embodiments of the invention as set forth herein are intended to be illustrative, not limiting. By way of example, the ordering or sequence of the steps may be reversed or rearranged in an order other than that set forth above. Steps may be omitted from the provisioning process. ITV network components described above can be omitted or replaced by other ITV network components. Moreover, the teachings of the present invention are not limited to ITV networks but are extendible to any network offering good(s) or service(s) to subscribers or nonsubscribers. These and other changes may be made without departing from the scope of the present invention.

## Claims

1. A method of managing the provisioning of interactive client devices for connection to an interactive television network for using interactive television (ITV) services, comprising:
receiving, at a first ITV network component, a provisioning request to at least one of remove a subscriber or user from a list of subscribers or users having a right to access the interactive television network, suspend a subscriber or user from assessing the interactive television network, and reactivating a subscriber's or user's ability to access the interactive television network;
determining which of a plurality of other ITV network components are to receive at least some of the provisioning information associated with the provisioning request; and
communicating the at least some of the provisioning information to at least one other ITV network component, the at least one other ITV network component being different from the first ITV network component.

2. The method according to claim 1, further comprising:
storing said provisioning information in a provisioning management database;
retrieving said provisioning information in said provisioning management database; and
communicating said provisioning information to a provisioning system of an ITV network component.

3. The method according to claim 1 or claim 2, further comprising:
receiving, at the at least one other ITV network component, the provisioning information;
determining at least one service provider from among a list of service providers that is to be notified of the provisioning request; and
forwarding the provisioning request to the service provider.

4. The method according to claim 3, further comprising:
receiving a message from the service provider that the provisioning request has been processed; and
sending a success message to the first ITV network component.

5. The method according to any of claims 1 to 4, wherein the provisioning information includes one or more network addresses from the provisioning system of an IP data network.

6. A system for managing the provisioning of interactive client devices for connection to an interactive television network for using interactive television (ITV) services, comprising:
first receiving means for receiving from a first ITV network component provisioning information relating to at least one subscriber or user;
determining means for determining which of a plurality of other ITV network components are to receive at least some of the provisioning information;
communicating means for communicating the at least some of the provisioning information to at least one other ITV network component, the at least one other ITV network component being different from the first ITV network component and providing a service requested by the at least one subscriber or user;
second receiving means for receiving from the at least one other ITV network component provisioning response information; and
storage means for storing the service provisioning response information.

7. The system according to claim 6, wherein the first receiving means includes interface adapter means for identifying a provisioning transaction corresponding to provisioning information received by the interface adapter from the at least one ITV network component and the determining means includes workflow engine means for directing flow of provisioning information in the provisioning transaction.

8. A provisioning message related to a provisioning transaction in an interactive television network (ITV), the provisioning message including:
a length field indicating a length of the provisioning message;
an action field indicating a provisioning action to be performed;
an object field indicating a type of object on which the provisioning action is to be performed; and
a provisioning information field containing provisioning information corresponding to the action and object.

9. The provisioning message of Claim 8, wherein the provisioning action is at least one of delete, update, create, and add.

10. The provisioning message of Claim 8 or Claim 9, wherein the object is at least one of subscriber, site, ITV client device, and user.
